# FASCICULE DE BREVET EUROPEEN

(11) **EP 2 127 917 B1**
(45) Date de publication et mention de la délivrance du brevet: **05.01.2011**
(21) Numéro de dépôt: 09160471.0
(22) Date de dépôt: 18.05.2009
(51) Int. Cl.: B60G 3/01, B60G 17/015, B60K 7/00, B60K 17/04

(54) **Liaison au sol à suspension électrique dotée d'un réducteur, et application**
Fahrgestell mit elektrischer Federung, das mit einem Reduzierstück ausgestattet ist, und seine Anwendung
Suspension system with electric suspension equipped with a reduction gear and application

(30) Priorité: 20.05.2008 FR 0853270
(43) Date de publication de la demande: 02.12.2009
(73) Titulaire: Société de Technologie Michelin, 63000 Clermont-Ferrand (FR); MICHELIN Recherche et Technique S.A., 1763 Granges-Paccot (CH)
(72) Inventeur: Sebe, Marc, 1740, NEYRUZ (CH)
(74) Mandataire: Lasson, Cédric Y. M.

(56) Documents cités:
- WO-A-2007/026198
- WO-A-2007/042870
- WO-A-2007/116252
- FR-A- 2 875 439
- FR-A- 2 898 833

## Description

L'invention concerne, de façon générale, la conception des véhicules terrestres.

Plus précisément, l'invention concerne, selon un premier de ses aspects, une liaison au sol pour un véhicule terrestre comportant au moins un essieu avant et un essieu arrière, cette liaison équipant l'un des essieux et comprenant un porte-roue, une roue portée à rotation autour de son axe par le porte-roue, une coulisse fixée au porte-roue et disposée suivant une direction sensiblement verticale, une glissière montée coulissante le long de la coulisse, un élément suspendu du véhicule, lié à la glissière au moins en translation le long de la coulisse, des moyens électriques d'entraînement portés par le porte-roue et entraînant sélectivement la roue en rotation autour de son axe, et des moyens de suspension contrôlant le coulissement de l'élément suspendu sur la coulisse.

Certaines au moins de ces caractéristiques sont connues de l'homme du métier, notamment par les documents de brevets EP 0 878 332, EP 1 000 779, WO 2006/032669, WO 2007/006776, et WO 2007/107570.

Conformément à la définition communément admise par l'homme du métier, l'expression "liaison au sol" désigne l'ensemble des organes d'un véhicule terrestre qui assurent notamment, au moins au niveau d'un essieu de ce véhicule, la fonction de roulement de ce véhicule, et de façon plus générale également ses fonctions d'entraînement, de freinage et de suspension.

La conception d'une liaison au sol dont notamment la fonction de suspension est intégrée dans la roue doit surmonter des problèmes d'encombrement difficiles à résoudre, en particulier dans le cas où la charge utile du véhicule à équiper est importante.

L'invention, qui se situe dans ce contexte, a pour but de proposer une architecture permettant de surmonter ces difficultés.

A cette fin, la liaison au sol de l'invention, par ailleurs conforme à la définition générique qu'en donne le préambule ci-dessus, est essentiellement caractérisée en ce que cette coulisse est constituée par un barreau unique, en ce que les moyens de suspension comprennent des moyens de suspension d'un premier type incluant une machine électrique de suspension liée à la glissière et associée à un réducteur à deux étages de réduction, et en ce que les moyens de suspension comprennent en outre au moins un organe de suspension d'un deuxième type porté par le porte-roue et propre à appliquer entre le porte-roue et l'élément suspendu une force dépendant de la position de coulissement de l'élément suspendu sur le barreau.

Il est ainsi possible de réduire la taille de la machine électrique de suspension car son dimensionnement est principalement lié au couple.

Dans le cas précisément où la charge du véhicule est élevée, les moyens électriques d'entraînement de la roue peuvent comprendre deux moteurs électriques.

Cet agencement est particulièrement avantageux pour une roue équipant l'essieu avant du véhicule, chaque moteur électrique des moyens électriques d'entraînement de cette roue pouvant en outre être associé à un réducteur à deux étages de réduction, porté par le porte-roue.

Dans le cas d'une roue équipant l'essieu arrière, la machine électrique de suspension peut être directement liée à l'élément suspendu.

En particulier, si l'élément suspendu appartient à une traverse de section creuse, la machine électrique de suspension peut être disposée dans cette traverse.

Dans le cas d'une roue arrière, les moyens de suspension comprennent avantageusement deux organes de suspension de deuxième type disposés symétriquement de part et d'autre du barreau.

Chaque organe de suspension de deuxième type comprend par exemple un ressort spiral dont une extrémité est reliée à l'élément suspendu, par exemple au moyen d'une courroie ou d'une chaîne.

Dans le cas d'une roue arrière dotée de deux moteurs électriques d'entraînement, ces moteurs sont eux-mêmes de préférence disposés symétriquement de part et d'autre du barreau.

Par ailleurs, le barreau associé à une roue arrière présente par exemple une section transversale de forme allongée suivant une direction parallèle au plan médian de la roue.

Pour optimiser le volume de chargement utile du véhicule, il peut être judicieux de décaler le plan médian de la roue vers l'extérieur du véhicule par rapport à la position occupée par le barreau.

Par ailleurs, les moyens électriques d'entraînement de chaque roue de l'un au moins des essieux comprennent avantageusement un résolveur unique et autonome.

Une liaison au sol présentant les caractéristiques précédemment décrites est particulièrement bien adaptée à la réalisation d'un véhicule utilitaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en perspective d'un véhicule mettant en oeuvre l'invention;
- la figure 2 est une vue schématique en perspective partielle et écorchée d'un premier mode de réalisation possible d'une structure de roue avant susceptible d'être utilisée, de façon non limitative, sur un véhicule tel qu'illustré à la figure 1;
- la figure 3 est une vue schématique en perspective partielle de la structure de roue illustrée à la figure 2, observée sur son côté interne au véhicule;
- la figure 4 est une vue en coupe partielle, suivant un plan axial horizontal, de la structure de roue avant illustrée aux figures 2 et 3;
- la figure 5 est une vue en élévation de la structure de roue avant illustrée à la figure 4, observée sur son côté interne au véhicule;
- la figure 6 est une vue en coupe partielle, suivant un plan axial horizontal, d'un deuxième mode de réalisation possible d'une structure de roue avant susceptible d'être utilisée, de façon non limitative, sur un véhicule tel qu'illustré à la figure 1;
- la figure 7 est une vue en élévation de la structure de roue avant illustrée à la figure 6, observée sur son côté interne au véhicule;
- la figure 8 est une vue en coupe partielle, suivant un plan axial horizontal, d'un premier mode de réalisation possible d'une structure de roue arrière susceptible d'être utilisée, de façon non limitative, sur un véhicule tel qu'illustré à la figure 1;
- la figure 9 est une vue en élévation de la structure de roue arrière illustrée à la figure 8, observée sur son côté interne au véhicule;
- la figure 10 est une vue en coupe partielle, suivant un plan axial horizontal, d'une variante de la structure de roue arrière illustrée aux figures 8 et 9;
- la figure 11 est une vue en élévation de la structure de roue arrière illustrée à la figure 10, observée sur son côté interne au véhicule;
- la figure 12 est une vue en coupe partielle, suivant un plan axial horizontal, d'un deuxième mode de réalisation possible d'une structure de roue arrière susceptible d'être utilisée, de façon non limitative, sur un véhicule tel qu'illustré à la figure 1; et
- la figure 13 est une vue en élévation de la structure de roue arrière illustrée à la figure 12, observée sur son côté interne au véhicule.

Comme annoncé précédemment, l'invention concerne la conception de véhicules terrestres, en particulier considérés du point de vue de ce que l'homme du métier dénomme la "liaison au sol", c'est-à-dire l'ensemble des organes du véhicule qui assurent notamment, au moins au niveau d'un essieu, la fonction de roulement de ce véhicule, et de façon plus générale également ses fonctions d'entraînement, de freinage et de suspension.

Plus précisément, l'invention concerne la conception de véhicules terrestres dont au moins une liaison au sol est dotée d'une fonction d'entraînement électrique localisée au niveau de la roue.

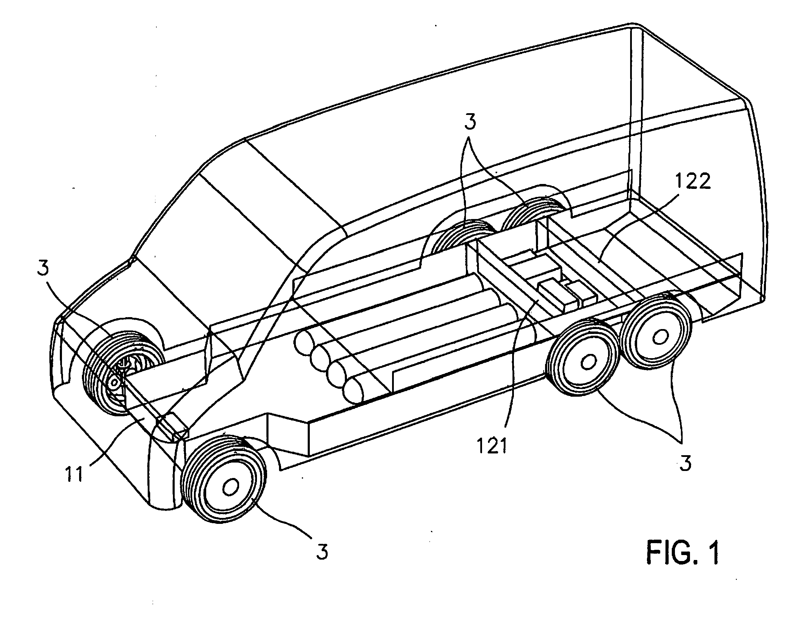

La figure 1 illustre un véhicule du type concerné par l'invention.

Un tel véhicule comprend un essieu avant 11 et au moins un essieu arrière 121, ce véhicule comprenant en l'occurrence un deuxième essieu arrière 122, identique au premier essieu arrière 121.

L'un au moins de ces essieux avant et arrière, et en l'occurrence chacun d'eux dans les différents modes de réalisation illustrés, est équipé, de chaque côté du véhicule, d'un porte-roue 2, d'une roue 3, d'une coulisse telle que 4a à l'avant et 4b à l'arrière, d'une glissière 5, d'un élément suspendu 6 du véhicule, et de moyens de suspension 8.

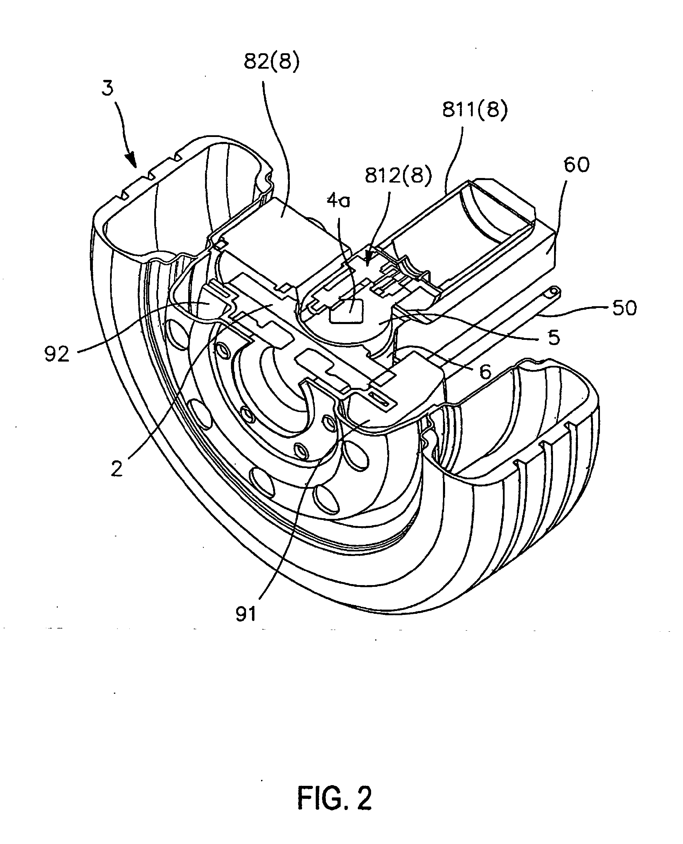

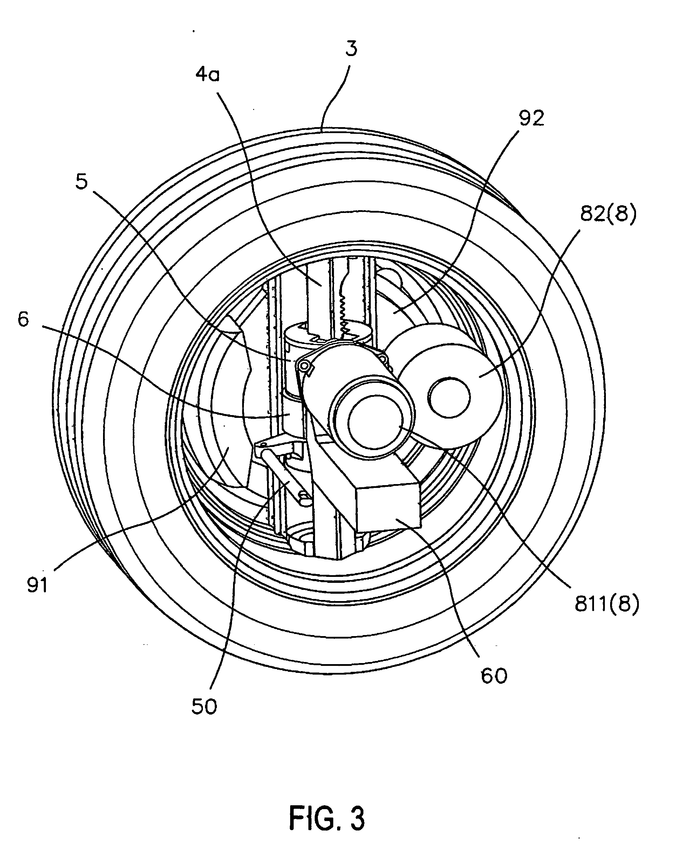

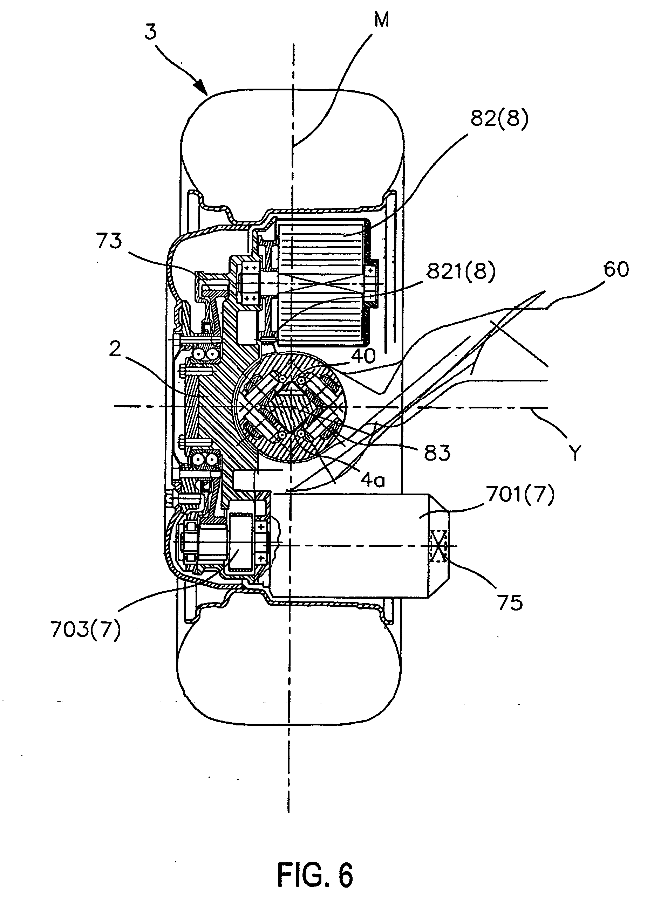

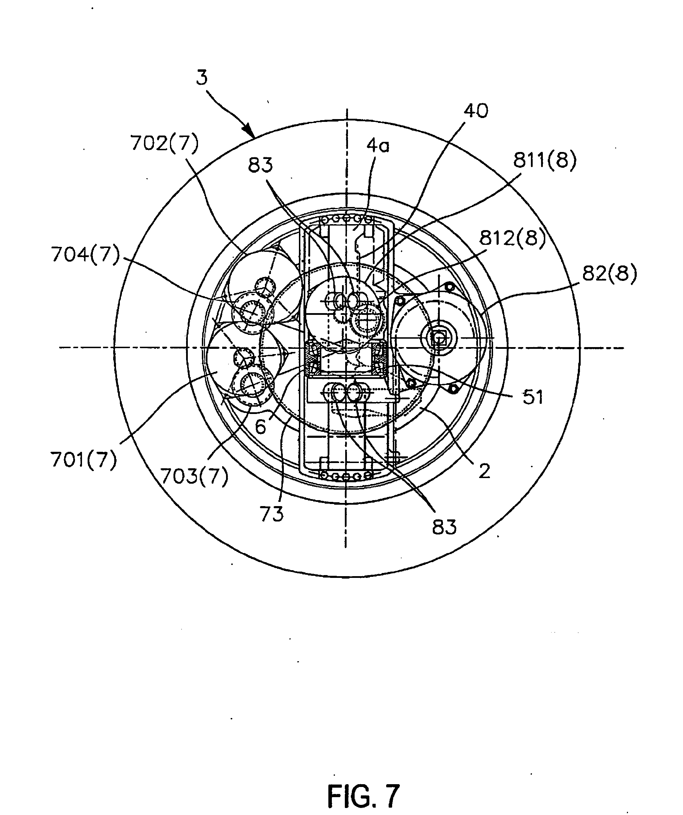

Des moyens électriques d'entraînement 7 sont également prévus pour chaque roue 3 de l'un au moins des essieux, et notamment des essieux arrière 121 et 122, les roues de l'essieu avant 11 pouvant elles-mêmes être motrices (figures 6 et 7) ou non (figures 2 à 5).

Chaque roue 3 est portée à rotation autour de son axe Y par le porte-roue 2, et chaque roue motrice est entraînée en rotation autour de son axe Y par des moyens électriques d'entraînement 7 qui lui sont dédiés et qui sont eux-mêmes portés par le porte-roue 2 associé à cette roue 3.

La coulisse 4a ou 4b associée à chaque roue est également fixée au porte-roue 2 et disposée suivant une direction sensiblement verticale.

Selon un aspect de l'invention, chaque coulisse 4a ou 4b est constituée d'un barreau unique.

Chaque glissière 5 est montée coulissante le long de la coulisse 4a ou 4b correspondante, c'est-à-dire suivant la direction sensiblement verticale, au moyen de galets de suspension 83.

L'élément suspendu 6, qui est typiquement constitué par l'extrémité d'une traverse 60 du véhicule, est lié, au moins en translation le long de la coulisse associée 4a ou 4b, à la glissière 5 correspondante.

Plus précisément, l'élément suspendu 6 est rigidement lié à la glissière 5 correspondante pour chaque roue arrière.

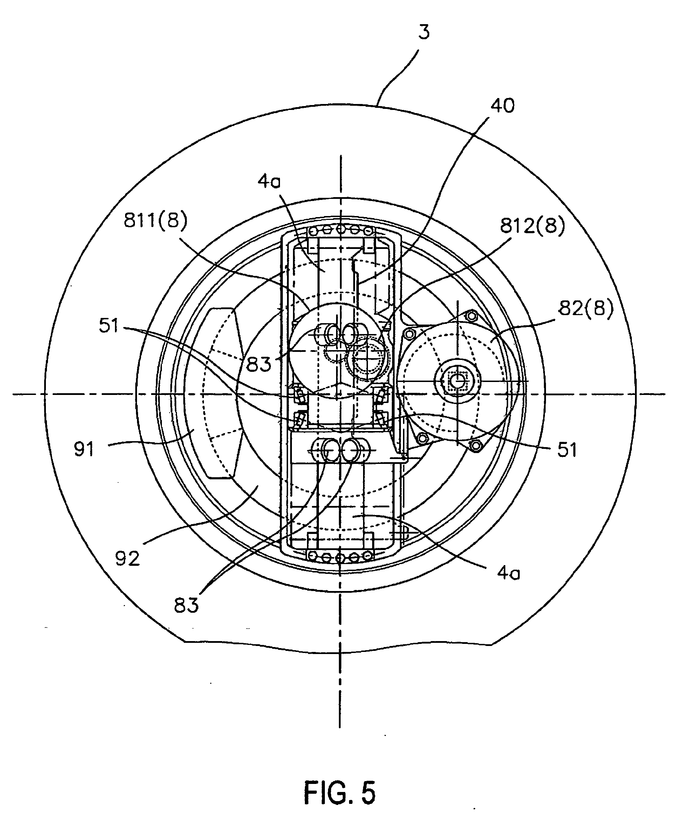

En revanche, pour chaque roue avant, l'élément suspendu 6 est lié à la glissière 5 correspondante en translation le long de la coulisse associée 4a, mais rendue mobile en rotation, grâce à des galets 51 (figures 5 et 7), autour de l'axe longitudinal du barreau 4a constituant cette coulisse afin de permettre les mouvements de braquage de cette roue avant.

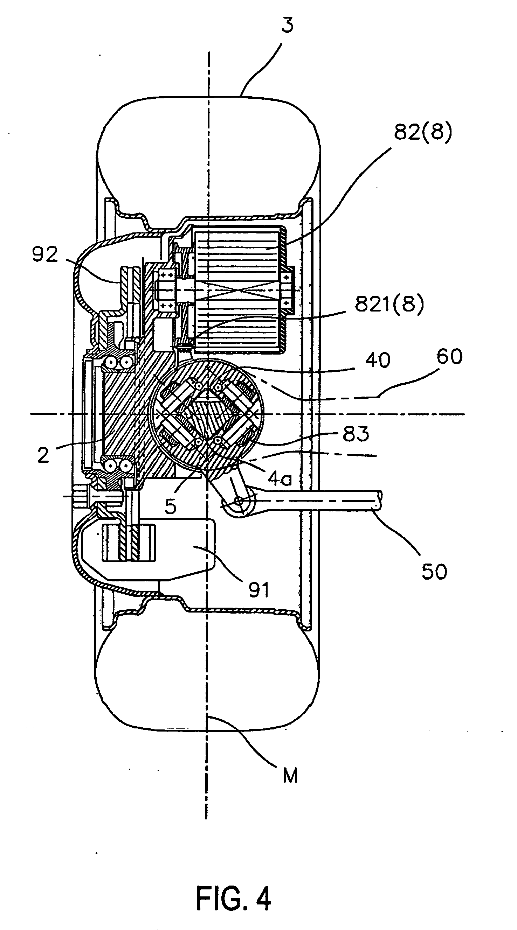

Comme le montre par ailleurs la figure 4, le barreau 4a associé à chaque roue avant 3 s'étend dans l'axe médian M de cette roue, et la glissière 5 est équipée d'une barre de direction articulée 50 qui permet faire braquer la roue à volonté par rapport à l'élément suspendu 6.

Les moyens de suspension 8 ont quant à eux pour fonction de contrôler le coulissement de l'élément suspendu 6 le long de la coulisse 4a ou 4b, le barreau constituant cette coulisse étant à cette fin doté d'une crémaillère 40.

Comme le véhicule de la figure 1 est doté de deux essieux arrière, 121 et 122, il est possible de répartir la charge du véhicule sur ces deux essieux, et donc d'équiper chacun de ces essieux arrière de roues présentant une largeur inférieure à celle des roues 3 équipant l'essieu avant 11.

De plus, il est possible d'augmenter encore le volume utile du véhicule en prévoyant que le plan médian M de chaque roue 3 de chaque essieu arrière 121 et 122 occupe une position décalée vers l'extérieur du véhicule par rapport à la position occupée par le barreau 4b du porte-roue 2 portant cette roue 3.

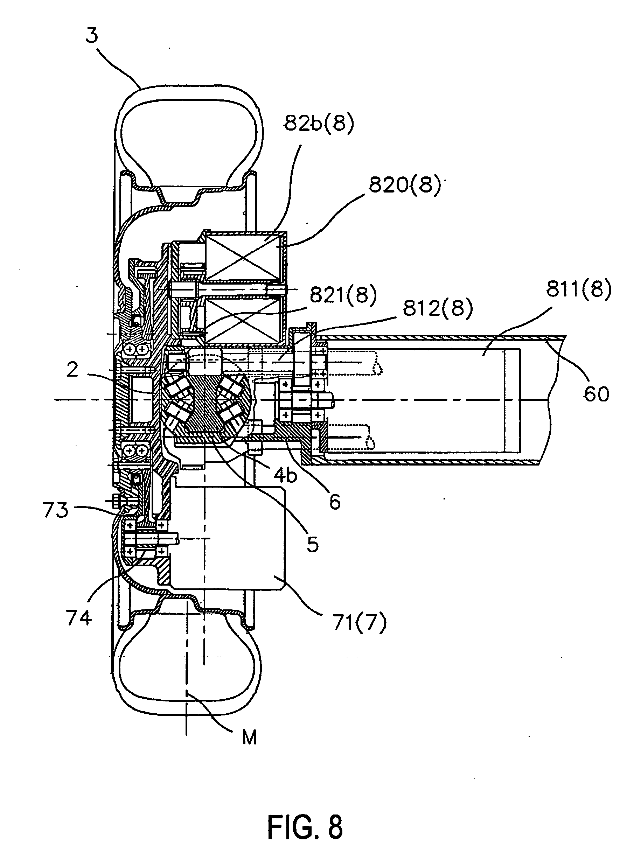

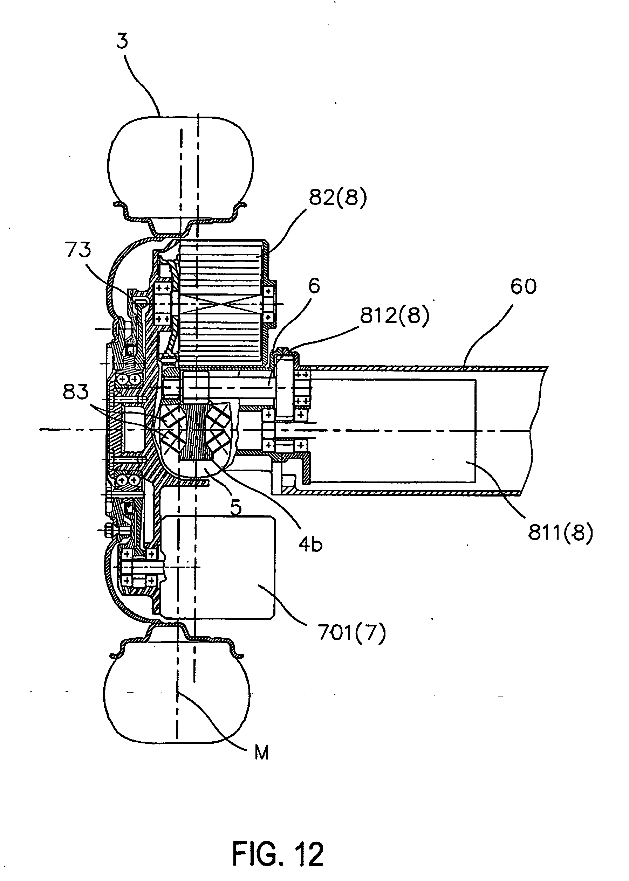

Comme le montrent les figures 8, 10 et 12, le barreau 4b de chaque porte-roue 2 de chacun des essieux arrière 121 et 122 présente en l'occurrence une section en forme de "I", dont la plus grande dimension est sensiblement parallèle au plan médian M de la roue 3 correspondante.

Comme indiqué précédemment, chaque roue avant 3 peut être motrice ou non, cette seconde possibilité étant illustrée aux figures 2 à 5.

Dans ce cas, la fonction de freinage est par exemple réalisée au moyen d'un frein à disque, comprenant un étrier 91 monté sur le porte-roue 2, et un disque 92 solidaire de la roue 3 en rotation autour de l'axe Y.

Dans le cas d'une roue avant motrice (figures 6 et 7), les moyens électriques d'entraînement 7 de cette roue comprennent par exemple une couronne d'entraînement 73, solidaire de cette roue en rotation autour de l'axe Y, et deux moteurs tels que 701 et 702 portés par le porte-roue 2, chacun de ces moteurs étant associé à un réducteur à deux étages de réduction, tel que 703 et 704, transmettant à la couronne 73 le couple fourni par le moteur correspondant.

Comme le montre la figure 6, chacun des moteurs tels que 701 peut aussi être équipé, de façon connue, d'un résolveur 75 disposé au bout de l'arbre de ce moteur et propre à délivrer un signal représentatif de la position angulaire de cet arbre et utilisé pour la commande de ce moteur.

Il convient de noter que l'expression de "moteur électrique" utilisé ici désigne toute machine propre à convertir de l'énergie électrique en un couple moteur, cette expression s'appliquant donc à toute machine également capable d'adopter une configuration dans laquelle elle assure la conversion inverse et dans laquelle elle permet donc de freiner le véhicule par récupération d'énergie électrique, comme décrit dans le document de brevet WO 2007/107570.

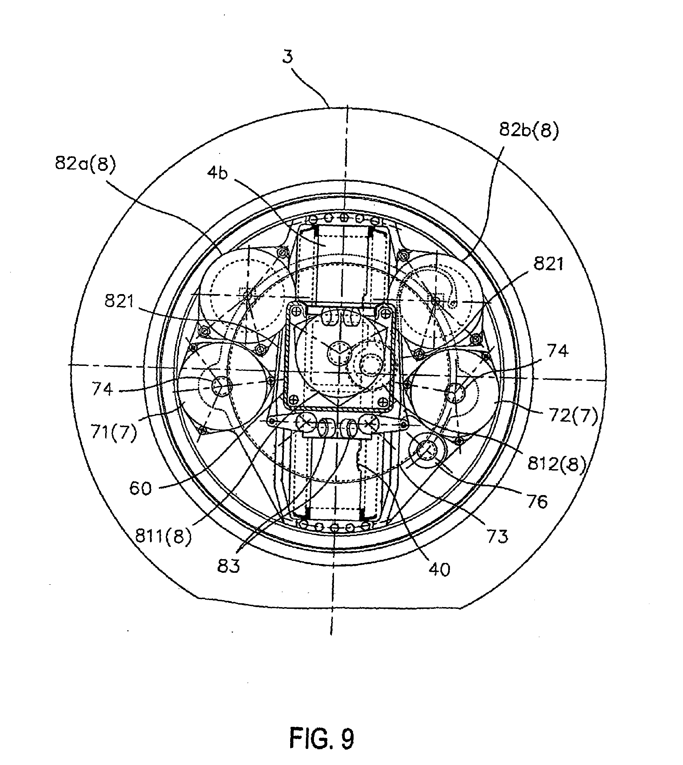

Chaque roue 3 de chacun des essieux arrière 121 et 122 (figures 9, 11, et 13) est de préférence mue par deux moteurs tels que 71, 72 ou 701, 702, dont l'arbre attaque directement la couronne d'entraînement 73 par l'intermédiaire d'un pignon moteur 74, c'est-à-dire sans l'aide d'un réducteur supplémentaire.

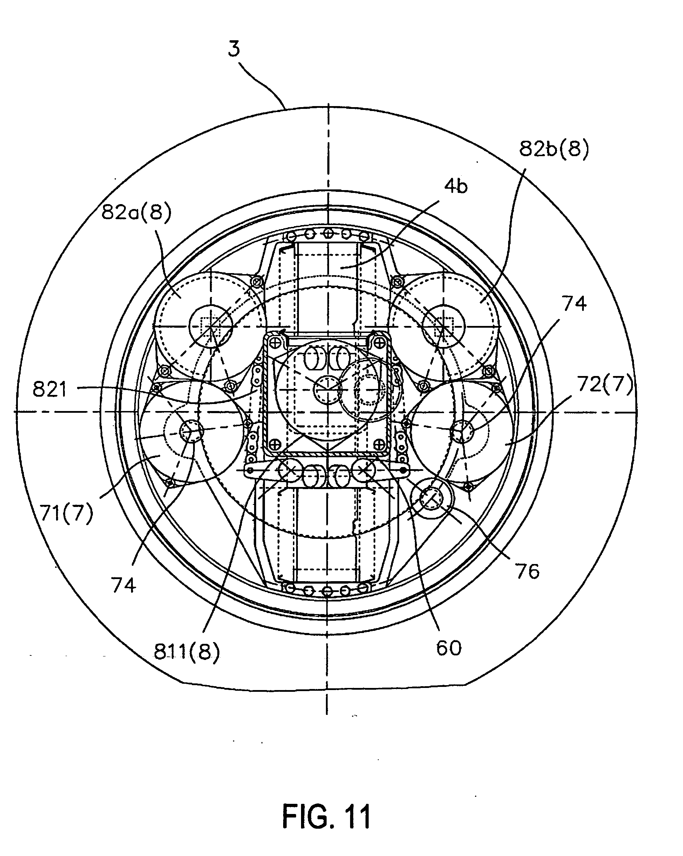

Dans une configuration avantageuse, illustrée aux figures 9 et 11, les moteurs 71 et 72 qui constituent les moyens électriques d'entraînement 7 de chaque roue arrière 3 sont disposés symétriquement de part et d'autre du barreau 4b.

Par ailleurs, comme le montrent également les figures 9 et 11, il peut être judicieux de remplacer le résolveur 75 illustré à la figure 6 et intégré à chaque moteur par un résolveur unique et autonome 76 engrenant avec la couronne d'entraînement 73 et disposé dans une position angulairement décalé par rapport à chaque moteur sur cette couronne.

Une telle disposition procure au moins l'avantage de réduire l'encombrement de chaque moteur suivant sa direction axiale et permet en outre, en exploitant le signal de sortie de ce résolveur unique 76 pour commander chaque moteur tel que 71 ou 72, de se dispenser de la nécessité d'utiliser autant de résolveurs que de moteurs.

Les moyens de suspension de chaque roue 3 comprennent typiquement des moyens électriques, conventionnellement dits "de premier type", et des moyens élastiques, conventionnellement dits "de second type".

Pour chacune des roues 3 de chacun des essieux avant et arrière 11, 121, et 122, les moyens de suspension du premier type comprennent en l'occurrence une machine électrique de suspension 811, la crémaillère 40 du barreau 4a ou 4b, et un réducteur 812 à deux étages de réduction interposé entre l'arbre de la machine électrique 811 et la crémaillère 40.

Pour chaque roue 3, la machine électrique de suspension 811 et le réducteur 812 sont liés à la glissière 5 correspondant à cette roue.

Ainsi, dans le mode de réalisation illustré à la figure 2 et relatif à une roue avant, tout braquage de la roue 3 par rapport à la traverse 60 provoque la rotation du barreau 4a autour de son axe longitudinal, donc la rotation concomitante de la glissière 5 et celle de la machine électrique 811 et du réducteur 812 autour de ce même axe longitudinal du barreau.

La situation est la même dans le cas d'une roue 3 équipant l'un quelconque des essieux arrière 121 et 122 (figures 8 à 13), à ceci près que l'élément suspendu 6, qui est typiquement constitué par une extrémité de la traverse 60, est alors fixe par rapport à la glissière 5, de sorte que la machine électrique de suspension 811 et le réducteur 812 sont fixement liés à cet élément suspendu 6.

De façon connue en soi, une telle machine électrique de suspension 811 peut être utilisée pour transformer en puissance électrique les mouvements relatifs de l'élément suspendu 6 par rapport au barreau 4a ou 4b, cette puissance électrique étant elle-même dissipée ou récupérée pour provoquer un amortissement de ces mouvements relatifs.

Grâce à la présence du réducteur 812, qui adopte nécessairement une position décentrée à la fois par rapport à la machine électrique de suspension 811 et par rapport au barreau 4b, il est possible d'aligner cette machine et ce barreau sur la direction longitudinale de la traverse 60.

Ainsi, dans le cas où cette traverse 60 présente une section creuse, la machine électrique de suspension 811 peut être disposée dans cette traverse sur chaque essieu arrière, comme le montrent les figures 8, 10, et 12.

Les moyens de suspension 8 comprennent par ailleurs, pour chaque roue 3, un ou plusieurs organes de suspension élastiques, ou de deuxième type, tels que 82, 82a, ou 82b, chacun de ces organes étant porté par le porte-roue 2 et propre à appliquer entre ce porte-roue 2 et l'élément suspendu 6 une force élastique dépendant de la position de coulissement de l'élément suspendu 6 sur le barreau 4a ou 4b.

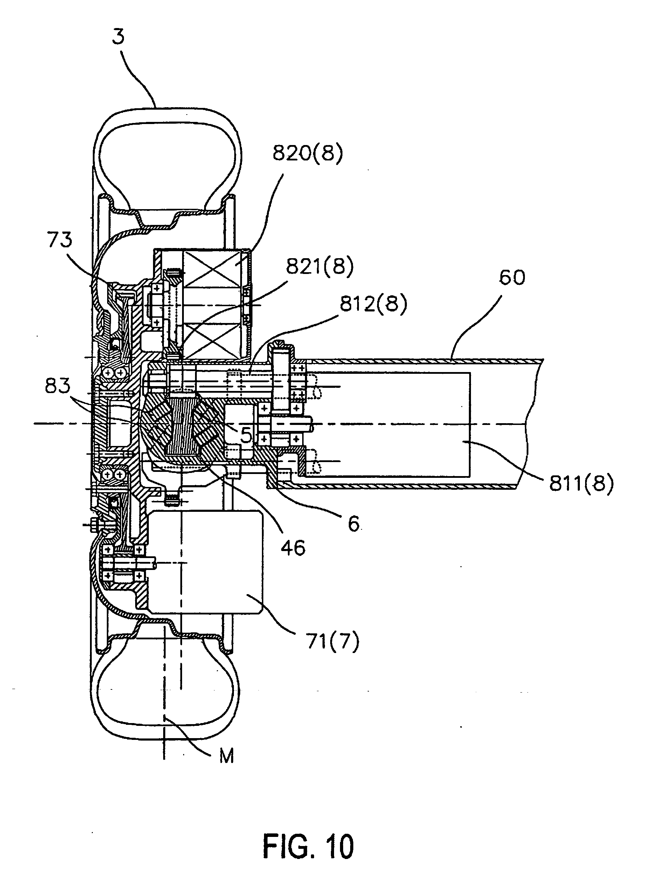

Chaque organe de suspension élastique tel que 82, 82a, et 82b comprend par exemple un ressort spiral 820 dont une extrémité est reliée à l'élément suspendu 6 au moyen d'un lien flexible 821 tel qu'une courroie (figures 4, 6, 8, 12), ou une chaîne (figure 10).

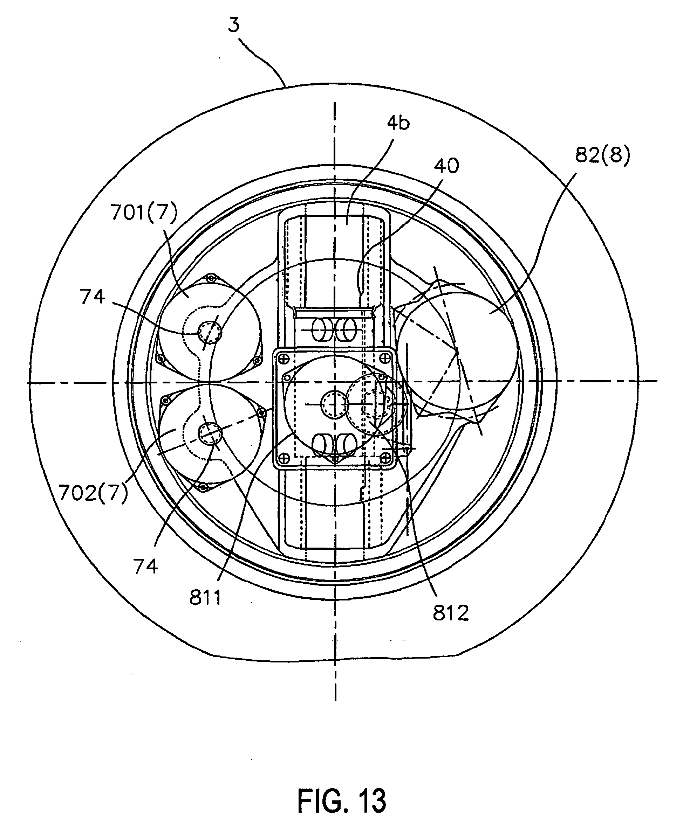

Alors qu'un seul organe de suspension élastique 82 peut suffire sur chaque roue de l'essieu avant 11 (figures 2 à 7), voire sur chaque roue d'essieu arrière (figure 13), il est plus judicieux d'équiper chaque roue d'essieu arrière de deux organes de suspension élastiques 82a et 82b.

Dans ce cas, illustré aux figures 9 et 11, ces organes de suspension. élastiques 82a et 82b sont en l'occurrence disposés symétriquement de part et d'autre du barreau 4b, comme le sont de préférence les moteurs 71 et 72 qui constituent les moyens électriques d'entraînement 7 de cette roue 3.

## Revendications

1. Liaison au sol pour un véhicule terrestre comportant au moins un essieu avant (11) et un essieu arrière (121, 122), cette liaison équipant l'un des essieux et comprenant un porte-roue (2), une roue (3) portée à rotation autour de son axe (Y) par le porte-roue (2), une coulisse (4a, 4b) fixée au porte-roue (2) et disposée suivant une direction sensiblement verticale, une glissière (5) montée coulissante le long de la coulisse (4a, 4b), un élément suspendu (6) du véhicule, lié à la glissière (5) au moins en translation le long de la coulisse (4a, 4b), des moyens électriques d'entraînement (7) portés par le porte-roue (2) et entraînant sélectivement la roue (3) en rotation autour de son axe (Y), et des moyens de suspension (8) contrôlant le coulissement de l'élément suspendu (6) sur la coulisse (4a, 4b), **caractérisée en ce que** cette coulisse est constituée par un barreau unique (4a, 4b), **en ce que** les moyens de suspension (8) comprennent des moyens de suspension d'un premier type incluant une machine électrique de suspension (811) liée à la glissière (5) et associée à un réducteur (812) à deux étages de réduction, et **en ce que** les moyens de suspension (8) comprennent en outre au moins un organe de suspension (82, 82a, 82b) d'un deuxième type porté par le porte-roue (2) et propre à appliquer entre le porte-roue (2) et l'élément suspendu (6) une force dépendant de la position de coulissement de l'élément suspendu (6) sur le barreau (4a, 4b).

2. Liaison au sol suivant la revendication 1, **caractérisée en ce que** les moyens électriques d'entraînement (7) de la roue (3) comprennent deux moteurs électriques (701, 702; 71, 72).

3. Liaison au sol suivant la revendication 2, **caractérisée en ce que** ladite roue (3) est une roue équipant l'essieu avant (11) et **en ce que** chaque moteur électrique (701, 702) des moyens électriques d'entraînement (7) de la roue est associé à un réducteur (703, 704) à deux étages de réduction porté par le porte-roue (2).

4. Liaison au sol suivant l'une quelconque des revendications 1 et 2, **caractérisée en ce que** ladite roue (3) est une roue équipant un essieu arrière (121, 122), et **en ce que** la machine électrique de suspension (811) est liée à l'élément suspendu (6).

5. Liaison au sol suivant la revendication 4, **caractérisée en ce que** ledit élément suspendu (6) appartient à une traverse (60) de section creuse, et **en ce que** la machine électrique de suspension (811) est disposée dans la traverse (60).

6. Liaison au sol suivant la revendication 4, **caractérisée en ce que** les moyens de suspension (8) comprennent deux organes de suspension (82a, 82b) de deuxième type disposés symétriquement de part et d'autre du barreau (4b).

7. Liaison au sol suivant l'une quelconque des revendications précédentes, **caractérisée en ce que** chaque organe de suspension (82, 82a, 82b) de deuxième type comprend un ressort spiral (820) dont une extrémité est reliée à l'élément suspendu (6), par exemple au moyen d'une courroie ou d'une chaîne (821).

8. Liaison au sol suivant les revendications 2 et 4, **caractérisée en ce que** les deux moteurs électriques (71, 72) d'entraînement de la roue (3) sont disposés symétriquement de part et d'autre du barreau (4b).

9. Liaison au sol suivant l'une quelconque des revendications 4, et 5 à 8 considérées dans leur rattachement à la revendication 4, **caractérisée en ce que** le barreau (4b) présente une section transversale de forme allongée suivant une direction parallèle au plan médian (M) de la roue (3).

10. Liaison au sol suivant la revendication 9, **caractérisée en ce que** le plan médian (M) de la roue (3) occupe une position décalée vers l'extérieur du véhicule par rapport à la position occupée par le barreau (4b).

11. Liaison au sol suivant l'une quelconque des revendications précédentes, **caractérisée en ce que** les moyens électriques d'entraînement (7) de chaque roue de l'un au moins des essieux comprennent un résolveur unique et autonome (76).

12. Application d'une liaison au sol suivant l'une quelconque des revendications précédentes à la réalisation d'un véhicule utilitaire.

## Claims

1. Ground-contact system for a land vehicle comprising at least one front axle (11) and one rear axle (121, 122), this system being fitted to one of the axles and comprising a hub carrier (2), a wheel (3) carried such that it can rotate about its axis (Y) by the hub carrier (2), a slide (4a, 4b) fixed to the hub carrier (2) and arranged in a substantially vertical direction, a slider (5) mounted so that it can slide along the slide (4a, 4b), a suspended element (6) of the vehicle connected to the slider (5) at least in terms of translation along the slide (4a, 4b), electric drive means (7) carried by the hub carrier (2) and selectively driving the rotation of the wheel (3) about its axis (Y), and suspension means (8) controlling the sliding of the suspended element (6) along the slide (4a, 4b), **characterized in that** this slide consists of a single bar (4a, 4b), **in that** the suspension means (8) comprise suspension means of a first type including an electric suspension machine (811) connected to the slider (5) and associated with a reduction gearset (812) having two reduction stages, and **in that** the suspension means (8) further comprise at least one suspension member (82, 82a, 82b) of a second type carried by the hub carrier (2) and able to apply, between the hub carrier (2) and the suspended element (6), a force that is dependent on the position of sliding of the suspended element (6) along the bar (4a, 4b).

2. Ground-contact system according to Claim 1, **characterized in that** the electric, derive means (7) that drive the wheel (3) comprise two electric motors (701, 702; 71, 72).

3. Ground-contact system according to Claim 2, **characterized in that** the said wheel (3) is a wheel fitted to the front axle (11), and **in that** each electric motor (701, 702) of the electric drive means (7) that drive the wheel is associated to a reduction gearset (703, 702) with two reduction stages carried by the hub carrier (2).

4. Ground-contact system according to either one of Claims 1 and 2, **characterized in that** the said wheel (3) is a wheel fitted to a rear axle (121, 122), and **in that** the electric suspension machine (811) is connected to the suspended element (6).

5. Ground-contact system according to Claim 4, **characterized in that** the said suspended element (6) belongs to a hollow section crossmember (60), and **in that** the electric suspension machine (811) is positioned inside the crossmember (60).

6. Ground-contact system according to Claim 4, **characterized in that** the suspension means (8) comprise two suspension members (82a, 82b) of the second type placed symmetrically one on each side of the bar (4b).

7. Ground-contact system according to any one of the preceding claims, **characterized in that** each suspension member (82, 82a, 82b) of the second type comprises a spiral spring (820) one end of which is connected to the suspended element (6), for example by means of a belt or of a chain (821).

8. Ground-contact system according to Claims 2 and 4, **characterized in that** the two electric motors (71, 72) that drive the wheel (3) are positioned symmetrically one of each side of the bar (4b).

9. Ground-contact system according to any one of Claims 4 and 5 to 8 when considered as dependent on Claim 4, **characterized in that** the bar (4b) has a cross section of elongate shape in a direction parallel to the mid-plane (M) of the wheel (3).

10. Ground-contact system according to Claim 9, **characterized in that** the mid-plane (M) of the wheel (3) occupies a position which is offset towards the outside of the vehicle by comparison with the position occupied by the bar (4b).

11. Ground-contact system according to any one of the preceding claims, **characterized in that** the electric drive means (7) that drive each wheel of at least one of the axles comprise a single and autonomous resolver (76).

12. Application of a ground-contact system according to any one of the preceding claims to the production of a utility vehicle.

## Patentansprüche

1. Bodenverbindung für ein Landfahrzeug mit mindestens einer Vorderachse (11) und einer Hinterachse (121, 122), wobei diese Verbindung an einer der Achsen vorgesehen ist und einen Radhalter (2), ein durch den Radhalter (2) drehbar um seine Achse (Y) getragenes Rad (3), eine an dem Radhalter (2) befestigte Gleitbahn (4a, 4b), die entlang einer im Wesentlichen vertikalen Richtung angeordnet ist, eine entlang der Gleitbahn (4a, 4b) verschiebbar angebrachte Gleitführung (5), ein aufgehängtes Element (6) des Fahrzeugs, das mit der Gleitführung (5) zumindest für eine Translationsbewegung entlang der Gleitbahn (4a, 4b) verbunden ist, elektrische Antriebsmittel (7), die von dem Radhalter (2) getragen werden und das Rad (3) gezielt um seine Achse (Y) drehbar antreiben, und Aufhängungsmittel (8), die das Verschieben des aufgehängten Elements (6) auf der Gleitbahn (4a, 4b) beeinflussen, enthält, **dadurch gekennzeichnet, dass** diese Gleitbahn aus einer einzigen Stange (4a, 4b) besteht, die Aufhängungsmittel (8) Aufhängungsmittel einer ersten Art umfassen, die eine mit der Gleitführung (5) verbundene und einem Untersetzungsgetriebe (812) mit zwei Untersetzungsstufen zugeordnete elektrische Federungsmaschine (811) enthält, und dass die Aufhängungsmittel (8) des Weiteren mindestens ein Aufhängungsglied (82, 82a, 82b) einer zweiten Art umfassen, das von dem Radhalter (2) getragen wird und zwischen dem Radhalter (2) und dem aufhängten Element (6) eine Kraft anlegt, die von der Gleitposition des aufgehängten Elements (6) auf der Stange (4a, 4b) abhängig ist.

2. Bodenverbindung nach Anspruch 1, **dadurch gekennzeichnet, dass** die elektrischen Antriebsmittel (7) des Rads (3) zwei Elektromotoren (701, 702; 71, 72) umfassen.

3. Bodenverbindung nach Anspruch 2, **dadurch gekennzeichnet, dass** das Rad (3) ein an der Vorderachse (11) vorgesehenes Rad ist und dass jeder Elektromotor (701, 702) der elektrischen Antriebsmittel (7) des Rads einem von dem Radhalter (2) getragenen Untersetzungsgetriebe (703, 704) mit zwei Untersetzungsstufen zugeordnet ist.

4. Bodenverbindung nach einem der Ansprüche 1 und 2, **dadurch gekennzeichnet, dass** das Rad (3) ein an der Hinterachse (121, 122) vorgesehenes Rad ist und dass die elektrische Federungsmaschine (811) mit dem aufgehängten Element (6) verbunden ist.

5. Bodenverbindung nach Anspruch 4, **dadurch gekennzeichnet, dass** das aufgehängte Element (6) Teil eines Querträgers (60) mit hohlem Querschnitt bildet und dass die elektrische Federungsmaschine (811) in dem Querträger (60) angeordnet ist.

6. Bodenverbindung nach Anspruch 4, **dadurch gekennzeichnet, dass** die Aufhängungsmittel (8) zwei Aufhängungsglieder (82a, 82b) zweiter Art umfassen, die symmetrisch auf beiden Seiten der Stange (4b) angeordnet sind.

7. Bodenverbindung nach einem der vorhergehenden Ansprüche, **dadurch gekennzeichnet, dass** jedes Aufhängungsglied (82, 82a, 82b) zweiter Art eine Spiralfeder (820) umfasst, von der ein Ende zum Beispiel mittels eines Riemens oder einer Kette (821) mit dem aufgehängten Element (6) verbunden ist.

8. Bodenverbindung nach einem der Ansprüche 2 und 4, **dadurch gekennzeichnet, dass** die beiden Elektromotoren (71, 72) zum Antrieb des Rads (3) symmetrisch auf beiden Seiten der Stange (4b) angeordnet sind.

9. Bodenverbindung nach einem der Ansprüche 4 und 5 bis 8, sofern von Anspruch 4 abhängig, **dadurch gekennzeichnet, dass** die Stange (4b) einen Querschnitt länglicher Form entlang einer parallel zur Mittelebene (M) des Rads (3) verlaufenden Richtung aufweist.

10. Bodenverbindung nach Anspruch 9, **dadurch gekennzeichnet, dass** die Mittelebene (M) des Rads (3) eine bezüglich der von der Stange (4b) eingenommenen Position nach außen des Fahrzeugs versetzte Position einnimmt.

11. Bodenverbindung nach einem der vorhergehenden Ansprüche, **dadurch gekennzeichnet, dass** die elektrischen Antriebsmittel (7) jedes Rads mindestens einer der Achsen einen einzigen und unabhängigen Resolver (76) umfassen.

12. Anwendung einer Bodenverbindung nach einem der vorhergehenden Ansprüche auf die Herstellung eines Nutzfahrzeugs.
